# EUROPEAN PATENT APPLICATION

(11) **EP 4 421 778 A2**
(43) Date of publication of application: **28.08.2024**
(21) Application number: 24155929.3
(22) Date of filing: 06.02.2024
(51) Int. Cl.: G08G 5/00, G10L 15/26

(54) **SYSTEM AND METHOD FOR PROCESSING PILOT REPORTS**

(30) Priority: 21.02.2023 US 202318172060
(71) Applicant: The Boeing Company, Arlington, VA 22202 (US)
(72) Inventor: NISHA, Jalja, Arlington, 22202 (US); HOSAMANI, Umesh, Arlington, 22202 (US); SHABADI, Ganesh, Arlington, 22202 (US); SHANKESHWARI, Akshay, Arlington, 22202 (US)
(74) Representative: Bryn-Jacobsen, Caelia

(57) **Abstract**

A system and method are provided for processing a pilot report (PIREP) for a flight in an aircraft. An audio voice message is received from a pilot, and inputs are received from one or more sensors associated with the aircraft. The audio voice message is converted to a text message, and the text message is parsed into one or more word/phrase snippets, wherein each of the one or more word/phrase snippets comprises one or more words and/or one or more phrases. A PIREP template is populated with the one or more inputs and with a subset of the one or more word/phrase snippets, thereby creating a completed PIREP. The completed PIREP is then transmitted to one or more receiving entities outside the aircraft. A model trained by a machine learning algorithm may be used to determine a severity level and a suggested mitigation plan for the completed PIREP.

## Description

### INTRODUCTION

The present disclosure is generally related to systems and methods for processing a pilot weather report (PIREP) for a flight in an aircraft. More particularly, the present disclosure relates to creating a PIREP by utilizing an audio voice message from a pilot within the aircraft along with inputs from one or more sensors associated with the aircraft.

Weather is an important consideration when flying an aircraft. Weather conditions may be monitored by satellite imagery, doppler radar, visual observation and the like, including observations made my pilots during flights.

A PIREP is a report generated by a pilot during a flight in an aircraft, in which the pilot reports the atmospheric and weather conditions encountered during the flight. Typically, a PIREP is completed by the pilot during the flight, and then the completed PIREP is submitted to an appropriate ground station. Some of the information contained in the PIREP may then be disseminated by the ground station to other aircraft. For example, such information may include adverse wind, precipitation and turbulence encountered over a given location at a given time.

Currently, a PIREP is completed by a pilot by filling out a paper form using predetermined abbreviations or codes. Then, the completed PIREP is submitted to an appropriate ground station either by radio during the flight or by telephone after landing the flight. However, this method may be deemed by some pilots as being cumbersome, outdated and time-consuming, with the abbreviations and codes used not being easily human-readable and thus easy to forget or to make mistakes on. These complaints can lead to some pilots skipping the filling out and submitting of a PIREP altogether.

### SUMMARY

According to one example, a method is provided for processing a PIREP. In this example, the method includes: receiving an audio voice message from a pilot within an aircraft; receiving one or more inputs from one or more sensors associated with the aircraft; converting the audio voice message to a text message; parsing the text message into one or more word/phrase snippets; populating a PIREP template with the one or more inputs and with a subset of the one or more word/phrase snippets, thereby creating a completed PIREP; and transmitting the completed PIREP to one or more receiving entities outside the aircraft.

The method may further include providing a query to the pilot as to whether to commence with the creating and the transmitting of the completed PIREP, and optionally may further include receiving a prompt from the pilot to commence with the creating and the transmitting of the completed PIREP.

The prompt may be one of a button press, a touchscreen touch, a switch throw and a voice command, and each of the one or more word/phrase snippets may comprise one or more words and/or one or more phrases. The one or more inputs may include at least one of a location of the aircraft, an altitude of the aircraft, a heading of the aircraft, a speed of the aircraft, a type of the aircraft, an age of the aircraft and a timestamp of the input. Additionally, the one or more receiving entities may include at least one of an air traffic control center, a back office and one or more other aircraft. Further, the one or more sensors may include a receiver for receiving information from the one or more receiving entities.

The method may also include comparing each of the one or more word/phrase snippets against a first set of atmospheric conditions and a second set of descriptors of the atmospheric conditions, and identifying matches between the one or more word/phrase snippets and the atmospheric conditions and descriptors, thereby defining one or more matching word/phrase snippets, wherein the one or more matching word/phrase snippets define the subset of the one or more word/phrase snippets.

The method may further include: comparing the completed PIREP against a model trained on a plurality of previously reported PIREPs received from other aircraft; determining a severity level and a suggested mitigation plan for the completed PIREP based on the comparing of the completed PIREP against the model; and providing the severity level and the suggested mitigation plan to the aircraft. Moreover, the model may be trained on the plurality of previously reported PIREPs by a machine learning algorithm.

According to another example, a method is provided for processing a PIREP for a flight in an aircraft. In this example, the method includes: (i) receiving an audio voice message from a pilot within the aircraft; (ii) receiving one or more inputs from one or more sensors associated with the aircraft; (iii) converting the audio voice message to a text message; (iv) parsing the text message into one or more word/phrase snippets, wherein each of the one or more word/phrase snippets comprises one or more words and/or one or more phrases; (v) comparing each of the one or more word/phrase snippets against a first set of atmospheric conditions and a second set of descriptors of the atmospheric conditions; (vi) identifying matches between the one or more word/phrase snippets and the atmospheric conditions and descriptors, thereby defining one or more matching word/phrase snippets, wherein the one or more matching word/phrase snippets define a subset of the one or more word/phrase snippets; (vii) populating a PIREP template with the one or more inputs and with the subset of the one or more word/phrase snippets, thereby creating a completed PIREP; and (viii) transmitting the completed PIREP to one or more receiving entities outside the aircraft.

The method may also include providing a query to the pilot as to whether to commence with the creating and the transmitting of the completed PIREP, and receiving a prompt from the pilot to commence with the creating and the transmitting of the completed PIREP.

The method may additionally include comparing the completed PIREP against a model trained by a machine learning algorithm on a plurality of previously reported PIREPs received from other aircraft, determining a severity level and a suggested mitigation plan for the completed PIREP based on the comparing of the completed PIREP against the model, and providing the severity level and the suggested mitigation plan to the aircraft.

In this method, the one or more inputs may include at least one of a location of the aircraft, an altitude of the aircraft, a heading of the aircraft, a speed of the aircraft, a type of the aircraft, an age of the aircraft and a timestamp of the input.

According to yet another example, a system is provided for processing a PIREP for a flight in an aircraft. In this example, the system includes: one or more sensors associated with the aircraft and configured to provide respective signals indicative of flight characteristics or conditions, aircraft characteristics or conditions and/or atmospheric characteristics or conditions; a microphone configured for receiving an audio voice message from a pilot within the aircraft; a transmitter configured for transmitting to one or more receiving entities outside the aircraft; and a control module operatively connected with the one or more sensors, the microphone and the transmitter. The control module has a memory configured to store an instruction set and processing circuitry configured to access the memory and execute the instruction set to cooperate with the one or more sensors, the microphone and the transmitter to: (i) receive the audio voice message from the pilot via the microphone; (ii) receive one or more inputs from the one or more sensors based on the signals; (iii) convert the audio voice message to a text message; (iv) parse the text message into one or more word/phrase snippets; (v) populate a PIREP template with the one or more inputs and with a subset of the one or more word/phrase snippets, thereby creating a completed PIREP; and (vi) transmit the completed PIREP to the one or more receiving entities via the transmitter.

The system may further include an indication device operatively connected with the control module and configured for providing one or both of a visual indication and an auditory indication to the pilot, and an input device operatively connected with the control module and configured for receiving feedback from the pilot. Additionally, the instruction set and the processing circuitry may be further configured to cooperate with the indication device and the input device to provide a query to the pilot via the indication device as to whether to commence with the creating and the transmitting of the completed PIREP, and receive a prompt from the pilot via the input device to commence with the creating and the transmitting of the completed PIREP.

In the system, the one or more sensors may include at least one of a location sensor, an altitude sensor, a heading sensor, a speed sensor, an aircraft type accessor, an aircraft age accessor, a time sensor and a receiver for receiving information from at least one of the one or more receiving entities.

The instruction set and the processing circuitry may be further configured to: compare each of the one or more word/phrase snippets against a first database of atmospheric conditions and a second database of descriptors of the atmospheric conditions; and identify matches between the one or more word/phrase snippets and the atmospheric conditions and descriptors, thereby defining one or more matching word/phrase snippets, wherein the one or more matching word/phrase snippets define the subset of the one or more word/phrase snippets.

Additionally or alternatively, the instruction set and the processing circuitry may be further configured to: compare the completed PIREP against a model trained by a machine learning algorithm on a plurality of previously reported PIREPs received from other aircraft; determine a severity level and a suggested mitigation plan for the completed PIREP based on the comparing of the completed PIREP against the model; and provide the severity level and the suggested mitigation plan to the aircraft.

The above features and advantages, and other features and advantages, of the present teachings are readily apparent from the following detailed description of some of the best modes and other examples for carrying out the present teachings, as defined in the appended claims, when taken in connection with the accompanying drawings.

### BRIEF DESCRIPTION OF THE DRAWINGS

**FIG. 1** is a block diagram of an aircraft in relation to a flight in an atmosphere and in relation to one or more receiving entities.
**FIG. 2** is a block diagram of a system and related elements for processing a PIREP.
**FIG. 3** is a block diagram of various sensors for use with the system of **FIG. 2****.**
**FIG. 4** is a block diagram illustrating a process for creating a completed PIREP.
**FIG. 5** is a block diagram illustrating a process for training a model using previously reported PIREPs and for using the model to determine a severity level and a suggested mitigation plan for a completed PIREP.
**FIG. 6** is a flowchart for a method for processing a PIREP.

### DETAILED DESCRIPTION

Referring now to the drawings, wherein like numerals indicate like parts in the several views, a system 24 and a method 100 for processing a PIREP 10 are shown and described herein. Note that as used herein, "processing" one or more PIREPs 10 may include one or more of capturing, creating, compiling, reporting, disseminating, making available, interpreting and utilizing the one or more PIREPs 10 (including completed PIREPs 70 and previously reported PIREPs 88, as discussed in more detail below).

In contrast with the abovementioned customary approach, the system 24 and method 100 for processing a PIREP 10 according to the present disclosure solve the technical problems associated with the creation and dissemination of PIREPs 10, by the technical effect of using voice-to-text technology to capture an audio voice message 49 of a pilot 50, so that the content of the audio voice message 49 is used to populate a PIREP template 72, along with inputs 48 from one or more sensors 30 associated with the aircraft 11, thereby providing significant benefits and technical advantages which are not taught or suggested by customary approaches. These benefits and technical advantages include allowing a pilot 50 to create a completed PIREP 70 using his/her voice, rather than the customary approach of having the pilot 50 fill out a paper PIREP form by hand, and having the completed PIREP 70 automatically transmitted to one or more receiving entities 17, thus making the PIREP creation and transmission process less complex and more likely to be used by pilots 50 as compared to customary approaches. Further, in one or more of the examples and configurations presented herein, the system 24 and method 100 may be part of an electronic flight bag (EFB) or other avionics cockpit systems.

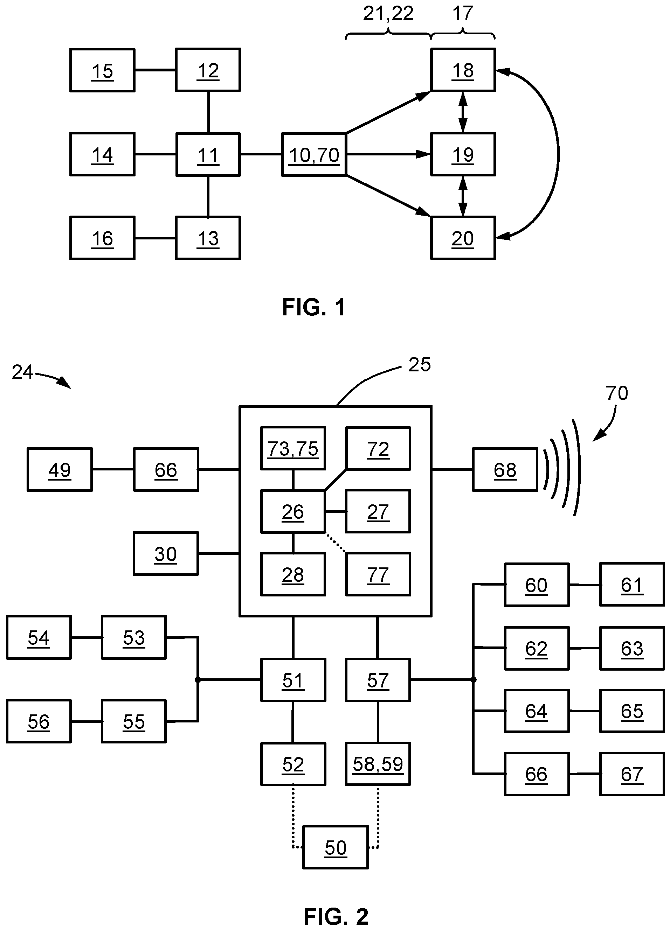

**FIG. 1** shows a block diagram of an aircraft 11 in relation to a flight 12 of the aircraft 11 in an atmosphere 13. The aircraft 11 has various aircraft characteristics and conditions 14, such as the aircraft type 40 and the aircraft age 42, as well as the aircraft's location 32, altitude 34, heading 36, speed (i.e., air speed and/or ground speed) 38, etc. (as described in further detail below). Similarly, the flight 12 has various flight characteristics and conditions 15, such as the take-off time and location, the landing time and location, the flight path through the atmosphere 13, the carrier, the flight number, the number of passengers, the weight of cargo, etc. The atmosphere 13 may include the region of the sky or environment immediately surrounding the aircraft 11, such as a portion of airspace through which the aircraft 11 is flying on the flight 12. The atmosphere 13 may include air, clouds, precipitation, winds, weather and the like, and may have various atmospheric and/or weather-related characteristics and conditions 16, such as air temperature, dew point, wind speed and direction, barometric pressure, humidity and the like.

**FIG. 1** also shows the aircraft 11 in relation to one or more receiving entities 17. These entities 17 may include an air traffic control (ATC) center 18, a back office 19 and one or more other aircraft 20 besides the subject aircraft 11. The ATC center 18 may include an air operational control (AOC) center or the like which may communicate with the subject aircraft 11 and with other aircraft 20. The back office 19 may be a centralized office, and/or a distributed network of offices, which send and receive information, data and communications to and from multiple aircraft 11, 20, for purposes other than those provided by the local ATC/AOC center 18. For example, the back office 19 may include a flight information system broadcast (FIS-B) system, an internet- or cloud-based data collection, processing and communications center, and the like. The back office 19 may include free or subscription-based data services for accumulating, analyzing and disseminating aviation-related information and analytics. Communications and data transfer between the subject aircraft 11 and each of the receiving entities 17 (as well as among the receiving entities 17 themselves) may occur via the cloud 21 and/or via radio frequency communications 22. Such communications and data transfer may include the transmission of a PIREP 10 - and more specifically, a completed PIREP 70 - from the subject aircraft 11 to each of the one or more receiving entities 17. Note that the subject aircraft 11 may optionally transmit a completed PIREP 70 to a nearby other aircraft 20, and the other aircraft 20 may in turn transmit the completed PIREP 70 to the ATC center 18, the back office 19 and/or to yet other aircraft 20.

**FIG. 2** shows a block diagram of a system 24 and related elements for processing a PIREP 10, 70 according to the present disclosure. The system 24 includes one or more sensors 30 associated with the aircraft 11. Each sensor 30 may be located inside the aircraft 11 or outside the aircraft 11, with each sensor 30 being configured to provide a respective signal 47 indicative of flight characteristics or conditions 15, aircraft characteristics or conditions 14 and/or atmospheric characteristics or conditions 16.

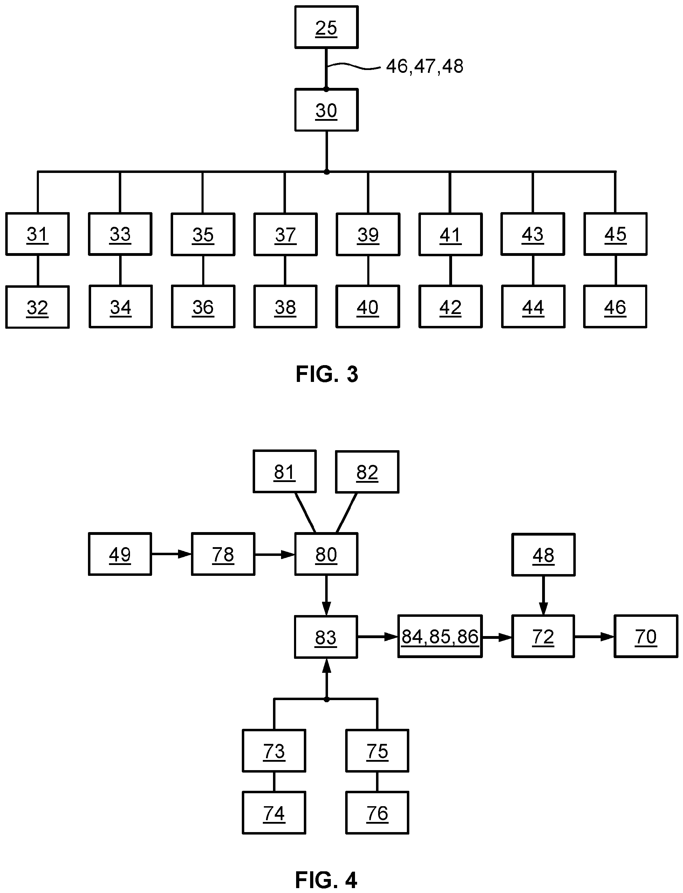

**FIG. 3** shows a block diagram of various sensors 30 for use with the system 24 of **FIG. 2****.** These may include a location sensor 31 for sensing the location 32 of the aircraft 11, an altitude sensor 33 for sensing the altitude 34 of the aircraft 11, a heading sensor 35 for sensing the heading 36 of the aircraft 11, a speed sensor 37 for sensing the air or ground speed 38 of the aircraft 11, an aircraft type sensor/accessor 39 for sensing/accessing the type 40 of the aircraft 11 (e.g., the aircraft's manufacturer and model), an aircraft age sensor/accessor 41 for sensing/accessing the age 42 of the aircraft 11, a time sensor/accessor 43 for sensing/accessing the time or timestamp 44 of the aircraft 11, and a receiver 45 (e.g., a radio frequency receiver) for receiving information 46 from at least one of the one or more receiving entities 17. For example, the receiver 45 may receive information 46 associated with any of the other types of sensors 30; e.g., the receiver 45 may receive a communication from the ATC center 18 that contains information 46 regarding one or more of the location 32, altitude 34, heading 36 and speed 38 of the aircraft 11 (which the ATC center 18 has determined by radar).

Note that as used herein, a "sensor" 30 may include a device which senses a characteristic or condition directly (e.g., temperature, pressure, etc.), as well as an "accessor" type of device which accesses or receives information regarding a characteristic or condition (e.g., a signal or voltage that is indicative of temperature, pressure, etc.) but which does not sense the characteristic or condition directly. For example, a "sensing" type of sensor 30 may directly sense an air temperature, and a voltage or value that is representative of the sensed air temperature may be stored in a memory register; then, an "accessing" type of sensor 30 may read or receive (i.e., access) the voltage or value from the memory register. Thus, as used herein, "sensing" a characteristic or condition may include the act of "accessing" information regarding the characteristic or condition.

The one or more sensors 30 are operatively connected with a control module 25 (i.e., the sensors 30 and control module 25 are configured for communication and cooperation with each other), with the control module 25 also being operatively connected with a microphone 66 and a transmitter 68. The microphone 66 is configured for receiving an audio voice message 49 from a pilot 50 within the aircraft 11, while the transmitter 68 (e.g., a radio frequency transmitter) is configured for transmitting to one or more receiving entities 17 outside the aircraft 11.

The system 24 may also include an indication device 51 which is operatively connected with the control module 25. The indication device 51 may take form of a screen 53 for providing a visual indication 54 to the pilot 50 and/or a speaker 55 for providing an auditory indication 56 to the pilot 50. The screen 53 may be located within a heads-up display which the pilot 50 may wear, or it may be situated elsewhere within the aircraft's cockpit, such as part of the instrument console. The speaker 55 may be located within a headset which the pilot 50 may wear, or it may be mounted elsewhere within the cockpit. The indication device 51 is configured for providing a query 52 to the pilot 50, in the form of a visual indication 54 and/or an auditory indication 56, as described in more detail below. Note that the indication device 51 may be configured to provide other visual and/or audio indications 54, 56 to the pilot 50 as well, in addition to a query 52.

The system 24 may further include an input device 57 which is operatively connected with the control module 25. The input device 57 is configured for receiving prompts 58 and/or feedback 59 from the pilot 50, and providing such prompts 58 and/or feedback 59 to the control module 25. The input device 57 may take one or more of various forms, such as a button or key 60 (such as one or more keys on a keyboard), a touchscreen 62, a switch 64 and a microphone 66. A prompt 58 or other feedback 59 may be entered into the control module 25 by the pilot 50 interacting with an input device 57, such as by making a button press 61 on a button 60, making a touch or gesture 63 (e.g., a swipe) on a touchscreen 62, making a switch throw or toggle 65 on a switch 64 (e.g., toggling the switch 64 from a first position to a second position), and speaking a voice command 67 into a microphone 66. Note that the microphones 66 shown at the top-left and bottom-right of **FIG. 2** may be two separate microphones 66, or they may be the same, singular microphone 66 which may serve the dual purposes of receiving an audio voice message 49 from the pilot 50 and receiving prompts/feedback 58, 59 from the pilot 50. Also note that as used herein, a "prompt" 58 refers to a response made by a pilot 50 via an input device 57 to a query 52, while "feedback" 59 refers to any other response or input besides a prompt 58 made or entered by a pilot 50 via an input device 57.

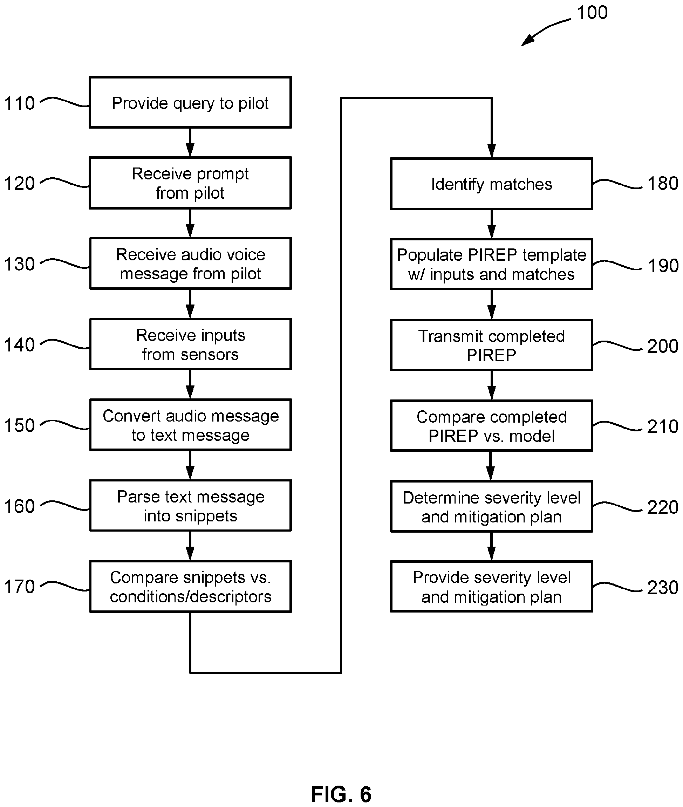

The control module 25 includes a memory 26 configured to store an instruction set 27, and processing circuitry 28 (e.g., a microprocessor) configured to access the memory 26 and execute the instruction set 27. The processing circuitry 28 is configured to access the memory 26 and execute the instruction set 27, so as to cooperate with the one or more sensors 30, the microphone 66 and the transmitter 68 (and optionally the one or more indication devices 51 and the one or more input devices 57) to execute or perform certain steps, which are illustrated in **FIGS. 4** and **6****.** Specifically, **FIG. 4** shows a block diagram of a process for creating a completed PIREP 70, and **FIG. 6** shows a flowchart of steps for a method 100 of processing a PIREP 10 (resulting in a completed 70).

First, an audio voice message 49 is received from the pilot 50 via the microphone 66 (see block 130). For example, the pilot 50 might say "Heavy thunderstorm" into the microphone 66, and this may be recorded and stored as an audio voice message 49.

Second, one or more inputs 48 are received from the one or more sensors 30 based on the sensor signals 47 (see block 140). For example, the aircraft's location 32, altitude 34, heading 36 and speed 38 may be received as inputs 48 from a location sensor 31, an altitude sensor 33, a heading sensor 35 and a speed sensor 37, respectively.

Third, the audio voice message 49 is converted to a text message 78 (see block 150), such as by using a voice-to-text technology. For example, the audio voice message 49 recording of "Heavy thunderstorm", which may be a single audio file, may be converted into the text message "Heavy thunderstorm", in the form of a sequence of letters and words in text form.

Fourth, the text message 78 is parsed into one or more word/phrase snippets 80 (see block 160), where each snippet 80 may comprise one or more words 81 and/or one or more phrases 82. (As used herein, a "phrase" 82 comprises a sequence of two or more words 81.) For example, the single text message "Heavy thunderstorm" may be parsed into two separate words 81: "heavy" and "thunderstorm".

Fifth, a PIREP template 72 is populated with the one or more inputs 48 and with a subset 86 of the one or more word/phrase snippets 80, thereby creating a completed PIREP 70 (see block 190). The PIREP template 72 may be in an electronic or software format that is readily manipulatable by a computer or microprocessor, optionally without requiring direct human intervention, wherein the computer/microprocessor may fill in "blanks" or pre-defined fields in the electronic/software form of the PIREP template 72 utilizing the subset 86 of snippets 80 and the sensor inputs 48. This is in contrast to the conventional or customary process of a pilot 50 filling out a paper PIREP form. For example, a "blank" PIREP template 72 may be electronically and automatically filled in (without direct human intervention) with the words "heavy" and "thunderstorm" in the "Weather" or "Remarks" sections of the PIREP template 72, and with numbers in the "Location", "Time" and "Altitude/Flight Level" sections of the PIREP template 72 that are indicative of the inputs 48 received from the location sensor 31, the time sensor 43 and the altitude sensor 33. Optionally, the subset 86 of snippets 80 and the sensor inputs 48 may be converted into a format that conforms with customary PIREP encoding practices, thereby defining respective converted/formatted inputs, and then the PIREP template 72 may be populated with these converted/formatted inputs.

Sixth, the completed PIREP 70 is transmitted to the one or more receiving entities 17 via the transmitter 68 (see block 200). For example, a completed PIREP 70 - with information automatically filled in by the execution of the instruction set 27 in the control module 25 - may be transmitted in electronic format by the subject aircraft 11 to the ATC center 18 and to a back office 19.

Note that one or more of the first through sixth steps presented above may be performed by the control module 25, and one or more others of the first through sixth steps may be performed by one or more of the receiving entities 17. For example, the first and second steps of receiving the audio voice message 49 and the sensor inputs 48 may be performed by the control module 25, and then the control module 25 may cause the audio voice message 49 and the sensor inputs 48 to be transmitted via the transmitter 68 to a back office 19. The back office 19 may then receive the audio voice message 49 and the sensor inputs 48 and perform the third through sixth steps of converting the audio voice message 49 into a text message 78, parsing the text message 78 into word/phrase snippets 80, populating a PIREP template 72 with the sensor inputs 48 and snippets 80 to create a completed PIREP 70, and transmitting the completed PIREP 70 to other aircraft 20. Alternatively, in another example, the control module 25 and its processing circuitry 28 and instruction set 27 may be configured to perform all six of these steps. Other examples of cooperation between the control module 25 and one or more of the receiving entities 17 are also possible.

Note that the memory 26 may also include one or more of the PIREP template 72, a first set or database 73 of words and phrases describing various atmospheric/weather conditions 74, and a second set or database 75 of words and phrases that are descriptors 76 of the various atmospheric/weather conditions 74. For example, the first set/database 73 may include such atmospheric conditions 74 as "storm", "thunderstorm", "wind", "rain", "ice", "visibility", etc., and the second set/database 75 may include such descriptors 76 as "heavy", "light", "mild", "miles per hour", "knots per hour", numbers, compass directions ("north-by-northwest"), etc. The memory 26 may also include a model 77, as described in more detail below. Each of the PIREP template 72, the first and second databases 73, 75 and the model 77 may be stored in a permanent, nonvolatile portion of the memory 26, or each may be imported into the memory 26 from a receiving entity 17 and stored in a temporary, volatile portion of the memory 26.

The instruction set 27 and the processing circuitry 28 may also be configured to cooperate with the indication device 51 and the input device 57 to provide a query 52 to the pilot 50 via the indication device 51 and to receive a prompt 58 from the pilot 50 via the input device 57. The query 52 may be in the form of text, icons, special colors or the like on a screen 53 and/or as one or more beeps, chirps or spoken words announced through a speaker 55, querying the pilot 50 whether he/she wishes to commence with the process of creating and transmitting a completed PIREP 70 (see block 110). The prompt 58 may be input by the pilot 50 via one or more button presses 61, a touchscreen touch/gesture 63, a switch throw/toggle 65 and a microphone voice command 67, indicating the pilot's answer to the earlier query 52 of whether to commence with the creating and transmitting of the completed PIREP 70 (see block 120). Optionally, the pilot 50 may input a prompt 58 via an input device 57 without or before a query 52 being provided, thus indicating the pilot's intention that the creating and transmitting of a completed PIREP 70 should be commenced.

**FIG. 4****,** as noted above, shows a block diagram of a process for creating a completed PIREP 70 according to the present disclosure. As illustrated in the block diagram, the audio voice message 49 is converted into a text message 78, and the text message 78 is parsed into one or more word/phrase snippets 80, which may comprise one or more words 81 and/or one or more phrases 82. A comparison 83 is made between the snippets 80 and the first set/database 73 of atmospheric/weather conditions 74 and the second set/database 75 of descriptors 76 of the atmospheric/weather conditions 74 (see block 170 of **FIG. 6****).** From this comparison 83, one or more matches 84 are identified between the snippets 80 and the atmospheric conditions 74 and descriptors 76, thereby defining one or more matching word/phrase snippets 85, wherein the one or more matching word/phrase snippets 85 define the aforementioned subset 86 of the one or more word/phrase snippets 80 (see block 180). The subset 86 of the word/phrase snippets 80 which contains the matching word/phrase snippets 85 may be smaller than the full set of word/phrase snippets 80, or it may be the same as the full set of word/phrase snippets 80. Accordingly, the instruction set 27 and the processing circuitry 28 may be further configured to compare each of the one or more word/phrase snippets 80 against the first set/database 73 of atmospheric/weather conditions 74 and the second set/database 75 of descriptors 76 of the atmospheric/weather conditions 74, and to identify the matches 84 between the snippets 80 and the atmospheric conditions 74 and descriptors 76, thus defining the one or more matching word/phrase snippets 85 and the abovementioned subset 86. This subset 86 of word/phrase snippets 80 may then be used to populate a PIREP template 72, along with inputs 48 from the sensors 30, to create a completed PIREP 70.

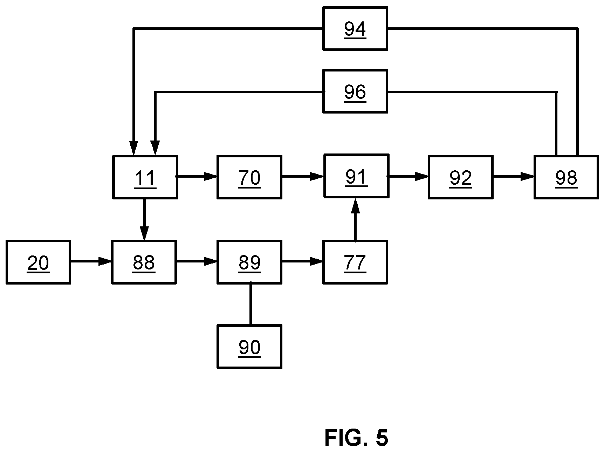

**FIG. 5** shows a block diagram of a process for further processing a completed PIREP 70. As shown in the diagram, a completed PIREP 70 is produced from a flight 12 in the subject aircraft 11, and a comparison 91 is made between the completed PIREP 70 and the abovementioned model 77. This model 77 may be developed by training 89 on a collection of previously reported PIREPs 88 and their respective data, such as by a machine learning algorithm 90, where the previously reported PIREPs 88 may be associated with and reported by other aircraft 20 as well as the subject aircraft 11. (The "respective data" associated with the collection of previously reported PIREPs 88 may include information on the respective flight path corrections, evasive actions and other risk avoidance/risk mitigation actions that were suggested and/or taken during each flight represented in the previously reported PIREPs 88.) In some configurations, the model 77 may comprise one or more multi-dimensional matrices of values, where each value may be quantitative (e.g., numerical) or qualitative (e.g., one or more words or descriptions). In other configurations, the model 77 may comprise one or more equations or relations which describe multiple types of data within the collection of previously reported PIREPs 88. The comparison 91 of the completed PIREP 70 with the model 77 yields a determination 92 of a relative severity level 94 of the completed PIREP 70 (e.g., "Urgent" or "Routine") as well as a suggested mitigation plan 96 for the completed PIREP 70.

For example, the comparison 91 may consider the aircraft type 40, aircraft age 42 and other factors such as comments reported in the "Remarks" or "Weather" sections of the completed PIREP 70, and may compare these factors against those of the previously reported PIREPs 88, in order to determine the relative severity level 94 of the conditions reported in the completed PIREP 70 versus the conditions reported in the previously reported PIREPs 88. For instance, if the subject aircraft 11 is relatively small, then adverse weather conditions may be perceived by the pilot 50 in the small aircraft 11 as being more severe than they would appear if the pilot 50 were in a larger, other aircraft 20. Thus, the comparison 91 and the determination 92 may take these relative factors into consideration, in order to arrive at a relative severity level 94 for the completed PIREP 70 and its reported conditions. Likewise, the comparison 91 and the determination 92 may also consider these and other factors in determining a suggested mitigation plan 96. This suggested mitigation plan 96 may include suggestions useable by the subject aircraft 11, as well as by other aircraft 20, for minimizing exposure to the reported atmospheric/weather conditions in the reported location 32 for at least the short-term (e.g., for at least the next 30 minutes after the completed PIREP 70 is reported). For example, the suggested mitigation plan 96 may advise that the aircraft 11, 20 may be re-routed (i.e., the heading 36 may be altered), altitude 34 may be changed, speed 38 may be increased or decreased, etc. in order for the aircraft 11, 20 to shorten or avoid exposure to the reported conditions. Once the determination 92 of the severity level 94 and the suggested mitigation plan 96 has been made, a providing 98 of the severity level 94 and the suggested mitigation plan 96 to the subject aircraft 11 and to other aircraft 20 may occur, such as by the aircraft 11 and/or one or more of the receiving entities 17 transmitting or broadcasting the severity level 94 and suggested mitigation plan 96 such that all aircraft 11, 20 are informed thereof.

Accordingly, the instruction set 27 and the processing circuitry 28 may be further configured to make a comparison 91 of the completed PIREP 70 against the model 77 (see block 210), make a determination 92 of a severity level 94 and a suggested mitigation plan 96 for the completed PIREP 70 based on the comparison 91 (see block 220), and provide (i.e., make a providing 98 of) the severity level 94 and the suggested mitigation plan 96 to the aircraft 11 and optionally to other aircraft 20 (see block 230). In other words, the comparison 91, determination 92 and providing 98 steps (i.e., blocks 210, 220 and 230) may be performed onboard the subject aircraft 11 by the control module 25 and its and its processing circuitry 28 and instruction set 27. Alternatively, one or more of the comparison 91, determination 92 and providing 98 steps may be performed by the control module 25 onboard the subject aircraft 12, and one or more others of the comparison 91, determination 92 and providing 98 steps may be performed offboard the subject aircraft 11 by one or more of the receiving entities 17. And in a further alternative, all three of the comparison 91, determination 92 and providing 98 steps may be performed fully offboard the subject aircraft 11, such as by an ATC center 18 or a back office 19. For example, in this further alternative approach, the steps relating to blocks 130-160 and 190-200 may be performed onboard the aircraft 11 by the aircraft's control module 25, with the completed PIREP 70 being transmitted to a back office 19 via the aircraft's transmitter 68. Then, the back office 19 may perform the comparison 91, determination 92 and providing 98 steps relating to blocks 210-230), with the back office 19 providing (e.g., transmitting or broadcasting) the determined severity level 94 and suggested mitigation plan 96 back to the subject aircraft 11 (and optionally to the ATC center 18, to the cloud 21 and to other aircraft 20 as well). Furthermore, in any of the approaches above, the collection of completed PIREPs 88, the model 77 and any instructions or code needed to execute the comparison 91, determination 92 and providing 98 steps may reside in the cloud 21; moreover, the execution of the comparison 91, determination 92 and providing 98 steps (as well as the training 89 of the model 77) may be performed in the cloud 21 as well.

As noted above, **FIG. 6** shows a flowchart of steps for a method 100 of processing a PIREP 10 (resulting in a completed 70), such as by utilizing the system 24 described herein. At block 130, an audio voice message 49 is received from a pilot 50, and at block 140, one or more inputs 48 are received from one or more sensors 30 associated with the aircraft 11. At block 150, the audio voice message 49 is converted to a text message 78, and at block 160, the text message 78 is parsed into one or more word/phrase snippets 80. At block 190, a PIREP template 72 is populated with the one or more sensor inputs 48 and with a subset 86 of the one or more word/phrase snippets 80, thereby creating a completed PIREP 70. And at block 200, the completed PIREP 70 is transmitted to one or more of the receiving entities 17.

Additionally, the method 100 may include, at block 110, providing a query 52 to the pilot 50 as to whether to commence with the creating and the transmitting of the completed PIREP 70. Additionally or alternatively, the method 100 may include, at block 120, receiving a prompt 58 from the pilot 50 to commence with the creating and the transmitting of the completed PIREP 70.

Further, the method 100 may also include, at block 170, comparing each of the one or more word/phrase snippets 80 against a first set 73 of atmospheric conditions 74 and a second set 75 of descriptors 76 of the atmospheric conditions 74, and, at block 180, identifying matches 84 between the one or more snippets 80 and the atmospheric conditions 74 and descriptors 76, thereby defining one or more matching word/phrase snippets 85, wherein the one or more matching word/phrase snippets 85 define the subset 86 of the one or more word/phrase snippets 80.

Moreover, the method 100 may further include: at block 210, comparing the completed PIREP 70 against a model 77 trained on a plurality of previously reported PIREPs 88 received from other aircraft 20; at block 220, determining a severity level 94 and a suggested mitigation plan 96 for the completed PIREP 70 based on the comparing of the completed PIREP 70 against the model 77; and, at block 230, providing the severity level 94 and the suggested mitigation plan 96 to the aircraft 11. Optionally, the model 77 may be trained on the plurality of previously reported PIREPs 88 by a machine learning algorithm 90.

The system 24 and method 100 of the present disclosure may be presented in numerous different examples, implementations and configurations.

According to one example, a method 100 is provided for processing a PIREP 10. In this example, the method 100 includes: at block 130, receiving an audio voice message 49 from a pilot 50 within an aircraft 11; at block 140, receiving one or more inputs 48 from one or more sensors 30 associated with the aircraft 11; at block 150, converting the audio voice message 49 to a text message 78; at block 160, parsing the text message 78 into one or more word/phrase snippets 80; at block 190, populating a PIREP template 72 with the one or more inputs 48 and with a subset 86 of the one or more word/phrase snippets 80, thereby creating a completed PIREP 70; and at **block 200,** transmitting the completed PIREP 70 to one or more receiving entities 17 outside the aircraft 11.

The method 100 may further include, at block 110, providing a query 52 to the pilot 50 as to whether to commence with the creating and the transmitting of the completed PIREP 70. Optionally, the method 100 may further include, at block 120, receiving a prompt 58 from the pilot 50 to commence with the creating and the transmitting of the completed PIREP 70.

The prompt 58 may be one of a button press 61, a touchscreen touch 63, a switch throw 65 and a voice command 67, and each of the one or more word/phrase snippets 80 may comprise one or more words 81 and/or one or more phrases 82. The one or more inputs 48 may include at least one of a location 32 of the aircraft 11, an altitude 34 of the aircraft 11, a heading 36 of the aircraft 11, a speed 38 of the aircraft 11, a type 40 of the aircraft 11, an age 42 of the aircraft 11 and a timestamp 44 of the input 48. Additionally, the one or more receiving entities 17 may include at least one of an air traffic control center 18, a back office 19 and one or more other aircraft 20. Further, the one or more sensors 30 may include a receiver 45 for receiving information 46 from the one or more receiving entities 17.

The method 100 may also include, at block 170, comparing each of the one or more word/phrase snippets 80 against a first set 73 of atmospheric conditions 74 and a second set 75 of descriptors 76 of the atmospheric conditions 74, and, at block 180, identifying matches 84 between the one or more word/phrase snippets 80 and the atmospheric conditions 74 and descriptors 76, thereby defining one or more matching word/phrase snippets 85, wherein the one or more matching word/phrase snippets 85 define the subset 86 of the one or more word/phrase snippets 80.

The method 100 may further include: at block 210, comparing the completed PIREP 70 against a model 77 trained on a plurality of previously reported PIREPs 88 received from other aircraft 20; at block 220, determining a severity level 94 and a suggested mitigation plan 96 for the completed PIREP 70 based on the comparing of the completed PIREP 70 against the model 77; and, at block 230, providing the severity level 94 and the suggested mitigation plan 96 to the aircraft 11. Moreover, the model 77 may be trained on the plurality of previously reported PIREPs 88 by a machine learning algorithm 90.

According to another example, a method 100 is provided for processing a PIREP 10 for a flight 12 in an aircraft 11. In this example, the method 100 includes: (i) at block 130, receiving an audio voice message 49 from a pilot 50 within the aircraft 11; (ii) at block 140, receiving one or more inputs 48 from one or more sensors 30 associated with the aircraft 11; (iii) at block 150, converting the audio voice message 49 to a text message 78; (iv) at block 160, parsing the text message 78 into one or more word/phrase snippets 80, wherein each of the one or more word/phrase snippets 80 comprises one or more words 81 and/or one or more phrases 82; (v) at block 170, comparing each of the one or more word/phrase snippets 80 against a first set 73 of atmospheric conditions 74 and a second set 75 of descriptors 76 of the atmospheric conditions 74; (vi) at block 180, identifying matches 84 between the one or more word/phrase snippets 80 and the atmospheric conditions 74 and descriptors 76, thereby defining one or more matching word/phrase snippets 85, wherein the one or more matching word/phrase snippets 85 define a subset 86 of the one or more word/phrase snippets 80; (vii) at block 190, populating a PIREP template 72 with the one or more inputs 48 and with the subset 86 of the one or more word/phrase snippets 80, thereby creating a completed PIREP 70; and (viii) at block 200, transmitting the completed PIREP 70 to one or more receiving entities 17 outside the aircraft 11.

The method 100 may also include, at block 110, providing a query 52 to the pilot 50 as to whether to commence with the creating and the transmitting of the completed PIREP 70, and, at block 120, receiving a prompt 58 from the pilot 50 to commence with the creating and the transmitting of the completed PIREP 70.

The method 100 may additionally include: at block 210, comparing the completed PIREP 70 against a model 77 trained by a machine learning algorithm 90 on a plurality of previously reported PIREPs 88 received from other aircraft 20; at block 220, determining a severity level 94 and a suggested mitigation plan 96 for the completed PIREP 70 based on the comparing of the completed PIREP 70 against the model 77; and, at block 230, providing the severity level 94 and the suggested mitigation plan 96 to the aircraft 11.

In this method 100, the one or more inputs 48 may include at least one of a location 32 of the aircraft 11, an altitude 34 of the aircraft 11, a heading 36 of the aircraft 11, a speed 38 of the aircraft 11, a type 40 of the aircraft 11, an age 42 of the aircraft 11 and a timestamp 44 of the input 48.

According to yet another example, a system 24 is provided for processing a PIREP 10 for a flight 12 in an aircraft 11. In this example, the system 24 includes: one or more sensors 30 associated with the aircraft 11 and configured to provide respective signals 47 indicative of flight characteristics or conditions 15, aircraft characteristics or conditions 14 and/or atmospheric characteristics or conditions 16; a microphone 66 configured for receiving an audio voice message 49 from a pilot 50 within the aircraft 11; a transmitter 68 configured for transmitting to one or more receiving entities 17 outside the aircraft 11; and a control module 25 operatively connected with the one or more sensors 30, the microphone 66 and the transmitter 68. The control module 25 has a memory 26 configured to store an instruction set 27 and processing circuitry 28 configured to access the memory 26 and execute the instruction set 27 to cooperate with the one or more sensors 30, the microphone 66 and the transmitter 68 to: (i) receive the audio voice message 49 from the pilot 50 via the microphone 66 (see block 130); (ii) receive one or more inputs 48 from the one or more sensors 30 based on the signals 47 (see block 140); (iii) convert the audio voice message 49 to a text message 78 (see block 150); (iv) parse the text message 78 into one or more word/phrase snippets 80 (see block 160); (v) populate a PIREP template 72 with the one or more inputs 48 and with a subset 86 of the one or more word/phrase snippets 80, thereby creating a completed PIREP 70 (see block 190); and (vi) transmit the completed PIREP 70 to the one or more receiving entities 17 via the transmitter 68 (see block 200).

The system 24 may further include an indication device 51 operatively connected with the control module 25 and configured for providing one or both of a visual indication 54 and an auditory indication 56 to the pilot 50, and an input device 57 operatively connected with the control module 25 and configured for receiving feedback 59 from the pilot 50. Additionally, the instruction set 27 and the processing circuitry 28 may be further configured to cooperate with the indication device 51 and the input device 57 to: provide a query 52 to the pilot 50 via the indication device 51 as to whether to commence with the creating and the transmitting of the completed PIREP 70 (see block 110); and receive a prompt 58 from the pilot 50 via the input device 57 to commence with the creating and the transmitting of the completed PIREP 70 (see block 120).

In the system 24, the one or more sensors 30 may include at least one of a location sensor 31, an altitude sensor 33, a heading sensor 35, a speed sensor 37, an aircraft type sensor/accessor 39, an aircraft age sensor/accessor 41, a time sensor/accessor 43 and a receiver 45 for receiving information 46 from at least one of the one or more receiving entities 17.

The instruction set 27 and the processing circuitry 28 may be further configured to: compare each of the one or more word/phrase snippets 80 against a first database 73 of atmospheric conditions 74 and a second database 75 of descriptors 76 of the atmospheric conditions 74 (see block 170); and identify matches 84 between the one or more word/phrase snippets 80 and the atmospheric conditions 74 and descriptors 76, thereby defining one or more matching word/phrase snippets 85, wherein the one or more matching word/phrase snippets 85 define the subset 86 of the one or more word/phrase snippets 80 (see block 180).

Additionally or alternatively, the instruction set 27 and the processing circuitry 28 may be further configured to: compare the completed PIREP 70 against a model 77 trained by a machine learning algorithm 90 on a plurality of previously reported PIREPs 88 received from other aircraft 20 (see block 210); determine a severity level 94 and a suggested mitigation plan 96 for the completed PIREP 70 based on the comparing of the completed PIREP 70 against the model 77 (see block 220); and provide the severity level 94 and the suggested mitigation plan 96 to the aircraft 11 (see block 230).

While various steps of the method 100 have been described as being separate blocks, and various functions of the system 24 have been described as being separate modules or elements, it may be noted that two or more steps may be combined into fewer blocks, and two or more functions may be combined into fewer modules or elements. Similarly, some steps described as a single block may be separated into two or more blocks, and some functions described as a single module or element may be separated into two or more modules or elements. Additionally, the order of the steps or blocks described herein may be rearranged in one or more different orders, and the arrangement of the functions, modules and elements may be rearranged into one or more different arrangements.

As used herein, a "module" may include hardware and/or software, including executable instructions, for receiving one or more inputs, processing the one or more inputs, and providing one or more corresponding outputs. Also note that at some points throughout the present disclosure, reference may be made to a singular input, output, element, etc., while at other points reference may be made to plural/multiple inputs, outputs, elements, etc. Thus, weight should not be given to whether the input(s), output(s), element(s), etc. are used in the singular or plural form at any particular point in the present disclosure, as the singular and plural uses of such words should be viewed as being interchangeable, unless the specific context dictates otherwise.

It should also be noted that while repeated references have been made herein to a "pilot" 50, as used herein a pilot 50 may include any member of the flight crew of an aircraft 11, such as a co-pilot, a flight engineer and a navigator.

The above description is intended to be illustrative, and not restrictive. While the dimensions and types of materials described herein are intended to be illustrative, they are by no means limiting and are exemplary examples. In the following claims, use of the terms "first", "second", "top", "bottom", etc. are used merely as labels, and are not intended to impose numerical or positional requirements on their objects. As used herein, an element or step recited in the singular and preceded by the word "a" or "an" should be understood as not excluding plural of such elements or steps, unless such exclusion is explicitly stated. Additionally, the phrase "at least one of A and B" and the phrase "A and/or B" should each be understood to mean "only A, only B, or both A and B". Moreover, unless explicitly stated to the contrary, examples "comprising" or "having" an element or a plurality of elements having a particular property may include additional such elements not having that property. And when broadly descriptive adverbs such as "substantially" and "generally" are used herein to modify an adjective, these adverbs mean "mostly", "mainly", "for the most part", "to a significant extent", "to a large degree" and/or "at least 51 to 99% out of a possible extent of 100%", and do not necessarily mean "perfectly", "completely", "strictly", "entirely" or "100%". Additionally, the word "proximate" may be used herein to describe the location of an object or portion thereof with respect to another object or portion thereof, and/or to describe the positional relationship of two objects or their respective portions thereof with respect to each other, and may mean "near", "adjacent", "close to", "close by", "at" or the like.

Further examples are set out in the clauses below:
1. A method for processing a pilot report (PIREP), comprising:
   receiving an audio voice message from a pilot within an aircraft;
   receiving one or more inputs from one or more sensors associated with the aircraft;
   converting the audio voice message to a text message; parsing the text message into one or more word/phrase snippets; populating a PIREP template with the one or more inputs and with a subset of the one or more word/phrase snippets, thereby creating a completed PIREP; and transmitting the completed PIREP to one or more receiving entities outside the aircraft.
2. The method of clause 1, further comprising: providing a query to the pilot as to whether to commence with the creating and the transmitting of the completed PIREP.
3. The method of clause 1 or clause 2, further comprising: receiving a prompt from the pilot to commence with the creating and the transmitting of the completed PIREP.
4. The method of clause 3 when dependent upon clause 2, wherein the prompt is one of a button press, a touchscreen touch, a switch throw and a voice command.
5. The method of any one of the preceding clauses, wherein each of the one or more word/phrase snippets comprises one or more words and/or one or more phrases.
6. The method of any one of the preceding clauses, wherein the one or more inputs include at least one of a location of the aircraft, an altitude of the aircraft, a heading of the aircraft, a speed of the aircraft, a type of the aircraft, an age of the aircraft and a timestamp of the input.
7. The method of any one of the preceding clauses, wherein the one or more receiving entities include at least one of an air traffic control center, a back office and one or more other aircraft.
8. The method of any one of the preceding clauses, further comprising: comparing each of the one or more word/phrase snippets against a first set of atmospheric conditions and a second set of descriptors of the atmospheric conditions; and identifying matches between the one or more word/phrase snippets and the atmospheric conditions and descriptors, thereby defining one or more matching word/phrase snippets, wherein the one or more matching word/phrase snippets define the subset of the one or more word/phrase snippets.
9. The method of any one of the preceding clauses, further comprising: comparing the completed PIREP against a model trained on a plurality of previously reported PIREPs received from other aircraft; determining a severity level and a suggested mitigation plan for the completed PIREP based on the comparing of the completed PIREP against the model; and providing the severity level and the suggested mitigation plan to the aircraft.
10. The method of clause 9, wherein the model is trained on the plurality of previously reported PIREPs by a machine learning algorithm.
11. The method of any one of the preceding clauses, wherein the one or more sensors includes a receiver for receiving information from the one or more receiving entities.
12. A method for processing a pilot report (PIREP) for a flight in an aircraft, comprising:
   receiving an audio voice message from a pilot within the aircraft; receiving one or more inputs from one or more sensors associated with the aircraft; converting the audio voice message to a text message; parsing the text message into one or more word/phrase snippets, wherein each of the one or more word/phrase snippets comprises one or more words and/or one or more phrases;
   comparing each of the one or more word/phrase snippets against a first set of atmospheric conditions and a second set of descriptors of the atmospheric conditions; identifying matches between the one or more word/phrase snippets and the atmospheric conditions and descriptors, thereby defining one or more matching word/phrase snippets, wherein the one or more matching word/phrase snippets define a subset of the one or more word/phrase snippets; populating a PIREP template with the one or more inputs and with the subset of the one or more word/phrase snippets, thereby creating a completed PIREP; and transmitting the completed PIREP to one or more receiving entities outside the aircraft.
13. The method of clause 12, further comprising: providing a query to the pilot as to whether to commence with the creating and the transmitting of the completed PIREP; and receiving a prompt from the pilot to commence with the creating and the transmitting of the completed PIREP.
14. The method of clause 12 or clause 13, further comprising: comparing the completed PIREP against a model trained by a machine learning algorithm on a plurality of previously reported PIREPs received from other aircraft; determining a severity level and a suggested mitigation plan for the completed PIREP based on the comparing of the completed PIREP against the model; and providing the severity level and the suggested mitigation plan to the aircraft.
15. The method of any one of clauses 12-14, wherein the one or more inputs include at least one of a location of the aircraft, an altitude of the aircraft, a heading of the aircraft, a speed of the aircraft, a type of the aircraft, an age of the aircraft and a timestamp of the input.
16. A system for processing a pilot report (PIREP) for a flight in an aircraft, comprising: one or more sensors associated with the aircraft and configured to provide respective signals indicative of flight characteristics or conditions, aircraft characteristics or conditions and/or atmospheric characteristics or conditions; a microphone configured for receiving an audio voice message from a pilot within the aircraft; a transmitter configured for transmitting to one or more receiving entities outside the aircraft; and a control module operatively connected with the one or more sensors, the microphone and the transmitter, the control module having a memory configured to store an instruction set and processing circuitry configured to access the memory and execute the instruction set to cooperate with the one or more sensors, the microphone and the transmitter to: receive the audio voice message from the pilot via the microphone; receive one or more inputs from the one or more sensors based on the signals; convert the audio voice message to a text message; parse the text message into one or more word/phrase snippets; populate a PIREP template with the one or more inputs and with a subset of the one or more word/phrase snippets, thereby creating a completed PIREP; and transmit the completed PIREP to the one or more receiving entities via the transmitter.
17. The system of clause 16, further comprising: an indication device operatively connected with the control module and configured for providing one or both of a visual indication and an auditory indication to the pilot; and an input device operatively connected with the control module and configured for receiving feedback from the pilot; wherein the instruction set and the processing circuitry are further configured to cooperate with the indication device and the input device to: provide a query to the pilot via the indication device as to whether to commence with the creating and the transmitting of the completed PIREP; and receive a prompt from the pilot via the input device to commence with the creating and the transmitting of the completed PIREP.
18. The system of clause 16 or clause 17, wherein the one or more sensors includes at least one of a location sensor, an altitude sensor, a heading sensor, a speed sensor, an aircraft type accessor, an aircraft age accessor, a time sensor and a receiver for receiving information from at least one of the one or more receiving entities.
19. The system of any one of clauses 16-18, wherein the instruction set and the processing circuitry are further configured to: compare each of the one or more word/phrase snippets against a first database of atmospheric conditions and a second database of descriptors of the atmospheric conditions; and identify matches between the one or more word/phrase snippets and the atmospheric conditions and descriptors, thereby defining one or more matching word/phrase snippets, wherein the one or more matching word/phrase snippets define the subset of the one or more word/phrase snippets.
20. The system of any one of clauses 16-19, wherein the instruction set and the processing circuitry are further configured to: compare the completed PIREP against a model trained by a machine learning algorithm on a plurality of previously reported PIREPs received from other aircraft; determine a severity level and a suggested mitigation plan for the completed PIREP based on the comparing of the completed PIREP against the model; and provide the severity level and the suggested mitigation plan to the aircraft.

This written description uses examples, including the best mode, to enable those skilled in the art to make and use devices, systems and compositions of matter, and to perform methods, according to this disclosure. It is the following claims, including equivalents, which define the scope of the present disclosure.

## Claims

1. A method (100) for processing a pilot report (PIREP) (10, 70), comprising:
receiving an audio voice message (49) from a pilot (50) within an aircraft (11);
receiving one or more inputs (48) from one or more sensors (30) associated with the aircraft (11);
converting the audio voice message (49) to a text message (78);
parsing the text message (78) into one or more word/phrase snippets (80);
populating a PIREP template (72) with the one or more inputs (48) and with a subset (86) of the one or more word/phrase snippets (80), thereby creating a completed PIREP (70); and
transmitting the completed PIREP (70) to one or more receiving entities (17) outside the aircraft (11).

2. The method (100) of claim 1, further comprising:
providing a query (52) to the pilot (50) as to whether to commence with the creating and the transmitting of the completed PIREP (70).

3. The method (100) of claim 1, further comprising:
receiving a prompt (58) from the pilot (50) to commence with the creating and the transmitting of the completed PIREP (70).

4. The method (100) of claim 3, wherein the prompt (58) is one of a button press (61), a touchscreen touch (63), a switch throw (65) and a voice command (67).

5. The method (100) of claim 1, wherein each of the one or more word/phrase snippets (80) comprises one or more words (81) and/or one or more phrases (82).

6. The method (100) of claim 1, wherein the one or more inputs (48) include at least one of a location (32) of the aircraft (11), an altitude (34) of the aircraft (11), a heading (36) of the aircraft (11), a speed (38) of the aircraft (11), a type (40) of the aircraft (11), an age (42) of the aircraft (11) and a timestamp (44) of the input (48).

7. The method (100) of claim 1, wherein the one or more receiving entities (17) include at least one of an air traffic control center (18), a back office (19) and one or more other aircraft (20).

8. The method (100) of claim 1, further comprising:
comparing each of the one or more word/phrase snippets (80) against a first set (73) of atmospheric conditions (74) and a second set (75) of descriptors (76) of the atmospheric conditions (74); and
identifying matches (84) between the one or more word/phrase snippets (80) and the atmospheric conditions (74) and descriptors (76), thereby defining one or more matching word/phrase snippets (85), wherein the one or more matching word/phrase snippets (85) define the subset (86) of the one or more word/phrase snippets (80).

9. The method (100) of claim 1, further comprising:
comparing the completed PIREP (70) against a model (77) trained on a plurality of previously reported PIREPs (88) received from other aircraft (20);
determining a severity level (94) and a suggested mitigation plan (96) for the completed PIREP (70) based on the comparing of the completed PIREP (70) against the model (77); and
providing the severity level (94) and the suggested mitigation plan (96) to the aircraft (11).

10. The method (100) of claim 9, wherein the model (77) is trained on the plurality of previously reported PIREPs (88) by a machine learning algorithm (90).

11. The method (100) of claim 1, wherein the one or more sensors (30) includes a receiver (45) for receiving information (46) from the one or more receiving entities (17).

12. A system (24) for processing a pilot report (PIREP) (10, 70) for a flight (12) in an aircraft (11), comprising:
one or more sensors (30) associated with the aircraft (11) and configured to provide respective signals (47) indicative of flight characteristics or conditions (15), aircraft characteristics or conditions (14) and/or atmospheric characteristics or conditions (16);
a microphone (66) configured for receiving an audio voice message (49) from a pilot (50) within the aircraft (11);
a transmitter (68) configured for transmitting to one or more receiving entities (17) outside the aircraft (11); and
a control module (25) operatively connected with the one or more sensors (30), the microphone (66) and the transmitter (68), the control module (25) having a memory (26) configured to store an instruction set (27) and processing circuitry (28) configured to access the memory (26) and execute the instruction set (27) to cooperate with the one or more sensors (30), the microphone (66) and the transmitter (68) to:
receive the audio voice message (49) from the pilot (50) via the microphone (66);
receive one or more inputs (48) from the one or more sensors (30) based on the signals (47);
convert the audio voice message (49) to a text message (78);
parse the text message (78) into one or more word/phrase snippets (80);
populate a PIREP template (72) with the one or more inputs (48) and with a subset (86) of the one or more word/phrase snippets (80), thereby creating a completed PIREP (70); and
transmit the completed PIREP (70) to the one or more receiving entities (17) via the transmitter (68).

13. The system (24) of claim 12, further comprising:
an indication device (51) operatively connected with the control module (25) and configured for providing one or both of a visual indication (54) and an auditory indication (56) to the pilot (50); and
an input device (57) operatively connected with the control module (25) and configured for receiving feedback (59) from the pilot (50);
wherein the instruction set (27) and the processing circuitry (28) are further configured to cooperate with the indication device (51) and the input device (57) to:
provide a query (52) to the pilot (50) via the indication device (51) as to whether to commence with the creating and the transmitting of the completed PIREP (70); and
receive a prompt (58) from the pilot (50) via the input device (57) to commence with the creating and the transmitting of the completed PIREP (70).

14. The system (24) of claim 12, wherein the one or more sensors (30) includes at least one of a location sensor (31), an altitude sensor (33), a heading sensor (35), a speed sensor (37), an aircraft type accessor (39), an aircraft age accessor (41), a time sensor (43) and a receiver (45) for receiving information (46) from at least one of the one or more receiving entities (17); and/or optionally
wherein the instruction set (27) and the processing circuitry (28) are further configured to:
compare each of the one or more word/phrase snippets (80) against a first database (73) of atmospheric conditions (74) and a second database (75) of descriptors (76) of the atmospheric conditions (74); and
identify matches (84) between the one or more word/phrase snippets (80) and the atmospheric conditions (74) and descriptors (76), thereby defining one or more matching word/phrase snippets (85), wherein the one or more matching word/phrase snippets (80) define the subset (86) of the one or more word/phrase snippets (80).

15. The system (24) of claim 12, wherein the instruction set (27) and the processing circuitry (28) are further configured to:
compare the completed PIREP (70) against a model (77) trained by a machine learning algorithm (90) on a plurality of previously reported PIREPs (88) received from other aircraft (20);
determine a severity level (94) and a suggested mitigation plan (96) for the completed PIREP (70) based on the comparing of the completed PIREP (70) against the model (77); and
provide the severity level (94) and the suggested mitigation plan (96) to the aircraft (11).
